# EUROPEAN PATENT APPLICATION

(11) **EP 1 923 233 A1**
(43) Date of publication of application: **21.05.2008**
(21) Application number: 07120407.7
(22) Date of filing: 09.11.2007
(51) Int. Cl.: B60C 1/00, B60C 13/04, B60C 17/00

(54) **Tire having a sidewall component containing a dispersion of adhesive coated short carbon fiber reinforcement**

(30) Priority: 16.11.2006 US 600555
(71) Applicant: THE GOODYEAR TIRE & RUBBER COMPANY, Akron, OH 44316-0001 (US)
(72) Inventor: Sanstrom, Paul Harry, Cuyahoga Falls, OH 44223 (US); Robinson, Jay Joseph, Stow, OH 44224 (US); Barnette, Rachel Rebekah, Akron, OH 44313 (US); Alford, Daniel Abe, Cuyahoga Falls, OH 44223 (US); Neidert, Matthew John, Akron, OH 44308 (US); Whisner, Jeremy Edward, Akron, OH 44314 (US); Luecke, Eric Matthew, Doylestown, OH 44230 (US); Schmalix, Charles Kenneth, Canal Fulton, OH 44614 (US); Puhala, Aaron Scott, Kent, OH 44240 (US); Botts, Bina Patel, Cuyahoga Falls, OH 44223 (US); Bezilla, Jr., Bernard Matthew, Stow, OH 44224 (US)
(74) Representative: Kutsch, Bernd

(57) **Abstract**

A tire (1) having a sidewall component containing a dispersion of adhesive coated short carbon fiber reinforcement is disclosed. Such sidewall component comprises at least one of an outer rubber layer (2) and an internal sidewall rubber insert (8).

## Description

### Field of the Invention

The invention relates to a tire having a sidewall component containing a dispersion of adhesive coated short carbon fiber reinforcement. Such sidewall component comprises at least one of an annular outer rubber layer and an annular sidewall internal rubber insert.

### Background for the Invention

Pneumatic tires typically have sidewalls which are conventionally desired to have good resistance to flex fatigue, scuff resistance and resistance to wear.

For this invention, it is desired to provide a rubber composition for at least one of an outer tire sidewall layer and a sidewall internal rubber insert which also promotes handling and ride cushioning effect for the tire.

Historically, various discontinuous (non-woven) fibers have been used to, for example, enhance both stiffness and modulus of rubber vulcanizates. For example, discontinuous cellulose fibers, including such fibers with high aspect ratios, have been used as dispersions thereof in rubber as disclosed for example in US-B- 3,697,364, US-B-3,802,478, and US-B- 4,236,563.

Various carbon fibers, including short fibers and carbon cords, have been proposed for use in various rubber compositions, including tire treads and tire bead regions. For example, see US-B- 5,323,829 and US-B- 5,718,781. A multi-filament carbon yarn has been suggested for reinforcement of rubber compositions in which the yarn is coated with a composite of resorcinol-formaldehyde reaction product, a vinylpyridine-styrene butadiene terpolymer, an acrylonitrile-butadiene copolymer and urea. For example, see US-B- 6,077,606 and US-B- 6,350,492.

For this invention, short, discontinuous carbon fibers are used for the rubber reinforcement which preferably have been coated (pre-coated) with an adhesive composition (to aid, or enhance, adhesion of the carbon fibers to the elastomer) comprising a vinylpyridine-styrene butadiene terpolymer, an acrylonitrile-butadiene copolymer and optionally urea (RFL adhesive coating).

In practice, such adhesive coated carbon fibers are preferably in a form of a plurality of carbon filaments. For example, such carbon fibers may be in a form of a cord (e.g. short, chopped cords) comprising a plurality of twisted (cabled) carbon filaments having a carbon filament count (number of carbon filaments in the cord) within a range, for example, of from 1,000 to 48,000. The average filament length (cord length) is preferably within a range of from 1 mm (millimeter) to 10 mm, optionally in a range of from 3 mm to 5 mm and an average diameter within a range of from 2 to 15 microns.

Representative of an adhesive coated carbon yarn is a carbon multi-filament yarn impregnated with a resorcinol-formaldehyde-rubber composite. The adhesive coated multi-filament yarn may then be chopped into the short yarn fibers for use in this invention.

Such resorcinol-formaldehyde composite may be, for example, comprising, and the product of, a resorcinol, formaldehyde, vinylpyridine/styrene/butadiene terpolymer latex and acrylonitrile/butadiene copolymer latex blend, which may optionally include urea. After application to and encapsulation of the carbon multi-filament yarn, the blend is dried and cured at an elevated temperature in a sense of allowing the latices to dry and the resorcinol and formaldehyde to react and thereby form a resin within the resultant rubber and to thereby form the resorcinol-formaldehyde resin-rubber composite coated carbon filaments. The resorcinol and formaldehyde react with each other in situ within the latex binder to form an adhesive resin. The rubber copolymer(s), in one aspect, form a resultant binder for the resin. For an example of such coated carbon fibers, see US-B- 6,077,606. For convenience, said adhesive coating may be referred to herein as an RFL (resorcinol-formaldehyde-latex) adhesive coating. If desired, the carbon multi-filament yarn may be pre-treated by impregnating the yarn with an epoxy resin prior to its impregnation with the RFL composite in order to provide enhanced bonding of the filaments to the said RFL composite.

The yarn comprising the RFL adhesive coated (encapsulated) carbon filaments is then chopped into short filamentary lengths and the coated filaments separated into short fibers, all by suitable means, for blending with and dispersing into the rubber composition.

A representative example of a multi-filament carbon yarn for such RFL treatment, or coating, is, for example, T700GC™ from Toray Industries or 12K-3MM 5000C TRT (trade name) from NGF Canada, Ltd.

In the description of this invention, the terms "rubber" and "elastomer" may be used interchangeably, unless otherwise provided. The terms "rubber composition", "compounded rubber" and "rubber compound" may be used interchangeably to refer to "rubber which has been blended or mixed with various ingredients and materials". The terms "cure" and "vulcanize" may be used interchangeably unless otherwise provided. In the description of this invention, the term "phr" refers to parts of a respective material per 100 parts by weight of rubber, or elastomer.

The terms "axial" and "axially" are used herein to refer to a direction that is parallel, or substantially parallel, to axis of the intended rotation of the tire.

The term " radially" is used herein to refer to a direction that is radially outward, or inward, from the axis of the intended rotation of the tire.

The term "annular" is used to refer to a circular direction around the axis of the intended rotation of the tire.

The "bead region" of the tire includes an annular tensile member containing rubber encapsulated steel cords (e.g. bead bundle) intended to fit a supporting wheel rim for the tire which may also be with or without one or more additional reinforcement members such as, for example, flippers, chippers, toe guards and chafers.

An "apex" refers to a lower sidewall insert of an elastomeric filler extending radially outward from the bead region in the direction of the tire shoulder region and positioned between carcass plies.

The "shoulder region" of the tire refers generally to a region of the tire where its tread joins its sidewall.

### Summary and Practice of the Invention

In accordance with this invention, a tire according to claim 1 is provided.

Dependent claims refer to preferred embodiments of the invention.

In one embodiment, the rubber sidewall layer containing said dispersion of adhesive coated short carbon fibers extends from the bead region of the tire radially outward to the shoulder region of the tire to thereby extend beyond the radially outward extension of the tire apex.

In one embodiment, the rubber sidewall layer containing said dispersion of adhesive coated short carbon fibers has a thickness which extends from the axial outer, visible surface of the sidewall axially inward to a tire carcass ply (e.g. an axially outer carcass ply).

In practice, said short adhesive coated carbon fibers preferably have an average length within a range of from 1 to 10 millimeters, alternately within a range of from 2 to 8 millimeters and an average diameter, for example, within a range of from 1 to 20 microns.

In practice, said short adhesive coated carbon fibers are preferably carbon fibers which have a coating thereon which preferably comprises an RFL adhesive coating comprising a resorcinol-formaldehyde resin and polymeric binder.

As hereinbefore discussed, such RFL adhesive, as is well known to those having skill in such art, and as further discussed in the aforesaid US-B-6,077,606, may be, for example a resorcinol-formaldehyde composite as a resinous product of resorcinol and formaldehyde together with a vinylpyridine/styrene/butadiene terpolymer (from a latex thereof) and acrylonitrile/butadiene copolymer (from a latex thereof) blend, which may optionally include urea. As also hereinbefore discussed, the carbon fibers may optionally be impregnated with an epoxy prior to coating with said RFL adhesive composite.

In practice, the adhesive coating on the carbon fibers is preferably the aforesaid resorcinol-formaldehyde resin composite of resorcinol-formaldehyde resin, which may also optionally contain urea, in the said copolymer rubber binder.

In one embodiment, said short adhesive coated carbon fibers may be somewhat randomly dispersed within the rubber composition or, in another embodiment may be relatively aligned somewhat parallel to each other (e.g. from 20 to 80 percent, or more, aligned which is considered herein to be significantly aligned on a relative basis, namely as compared to being randomly dispersed and not aligned altogether) in the direction of the flow of the rubber composition by a contraction extrusion of the rubber composition (extrusion of the uncured rubber composition) through a suitable shaping die. By contraction extrusion, it is meant that the volumetric flow of the rubber composition extruded through a shaping die is contracted (e.g. by a reduction of the cross-section of the conduit through which the rubber composition flows) as the rubber composition approaches the die opening and is expanded (e.g. an expansion of the cross-section of the conduit through which the rubber composition flows) as it leaves the shaping die opening.

In such manner, then, the rubber tire sidewall rubber layer or sidewall internal rubber insert may be formed which contains the adhesive coated short carbon fibers which are substantially aligned with each other in parallel manner such as for example, in the rolling direction of the tire (e.g. in an annular direction) for the outer sidewall rubber layer and axially outward toward the shoulder region of the tire for the sidewall internal rubber insert. Such alignment of the adhesive coated short carbon fibers may be beneficial in a sense of being able to maximize directional stiffness of the tire sidewall layer containing the short adhesive coated carbon fiber reinforcement, and thus such directional stiffness of the tire sidewall component itself.

Alternatively, said short adhesive coated carbon fibers may be significantly aligned (e.g. from 10 to 40 percent, or more, aligned which is considered herein to be significantly aligned on a relative basis, namely as compared to being randomly dispersed and not aligned altogether) with each other in the direction substantially perpendicular (e.g. from 10 to 30 percent of from the perpendicular in a sense of being perpendicular) to the flow of the rubber composition by an expansion extrusion of the rubber composition (extrusion of the uncured rubber composition) through a suitable shaping die. By expansion extrusion, it is meant that the volumetric flow of the rubber composition extruded through a shaping die is expanded (e.g. the cross-section of the conduit through the rubber composition flows is enlarged through which the rubber composition flows) as the rubber composition approaches the die opening and is contracted (e.g. by a reduction of the cross-section of the conduit through which the rubber composition flows) as the rubber composition leaves the die opening.

In such manner, then, an extruded rubber tire sidewall layer or sidewall internal rubber insert may be formed, for example, which contains short adhesive coated carbon fibers which are at least partially aligned with each other in a somewhat radial direction or in a somewhat annular direction.

Such radial alignment of the short adhesive coated carbon fibers may be beneficial in the sense of the aforesaid enhancement of directional stiffness of the rubber composition of the sidewall layer hence the directional stiffness of the tire sidewall component itself.

As previously discussed, the tire sidewall with the inclusion of the adhesive coated short carbon fiber dispersion is intended to supplement the tire sidewall in a sense of promoting improved handling particularly in evasive cornering to avoid road hazards as well as to promote ride comfort.

In practice, it is considered herein that an additional aspect of the inclusion of the adhesive coated short carbon fiber dispersion in the outer sidewall or in the sidewall internal rubber insert is to promote heat and electrical conductivity for the sidewall itself.

Accordingly, by strategically positioning an outer tire sidewall layer with the inclusion of the adhesive coated short carbon fiber dispersion in its rubber composition, it is considered herein that tire handling and ride cushioning may be improved

Representative examples of conjugated diene-based elastomers for said adhesive coated short carbon fiber dispersion-containing outer tread sidewall layer or sidewall internal rubber insert may comprise, for example, cis 1,4-polyisoprene rubber (usually preferably natural rubber) which may, if desired, be used in combination with another diene based elastomer such as for example, cis 1,4-polybutadiene rubber and/or isoprene/butadiene rubber.

### Brief Description of the Drawings

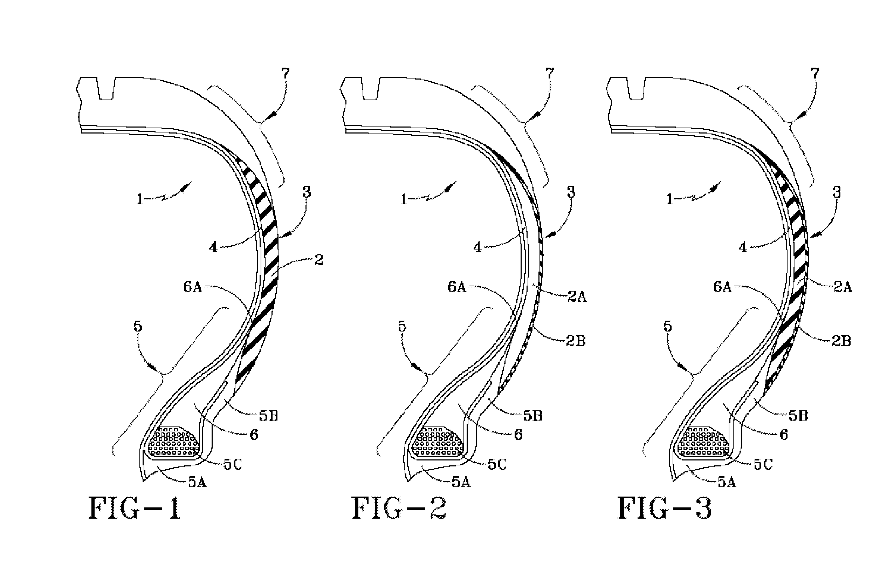

For a further understanding of the invention, FIG. 1, FIG. 2, FIG. 3, FIG. 4, FIG. 5 and FIG. 6 are provided to depict a partial cross-sectional view of a tire according to the invention and particularly its sidewall.

### The Drawings

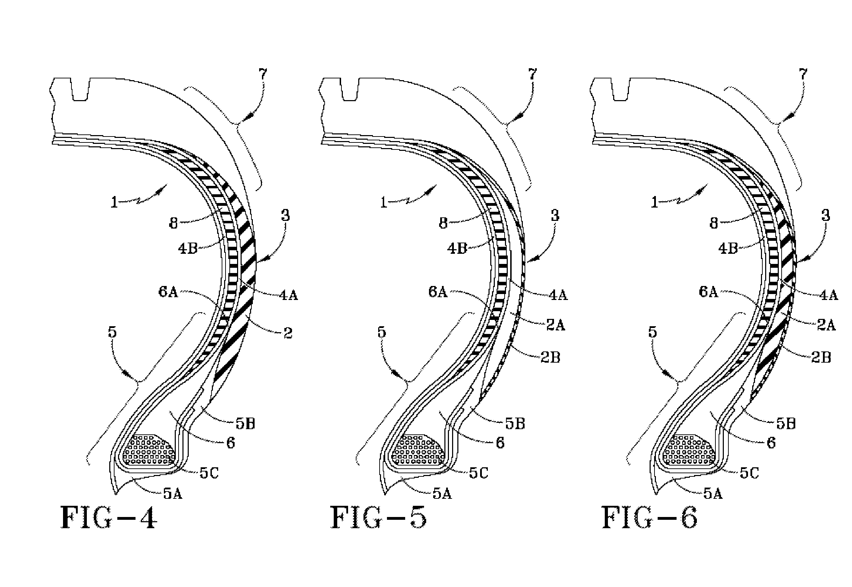

In the drawings, a tire 1 is shown with an annular outer sidewall rubber layer in a form of an individual rubber layer 2 or laminar combination of rubber layers 2A, 2B, carcass ply 4, or carcass plies 4A, 4B for FIG. 4, shoulder region 7 and bead region 5 which is composed of a rubber toeguard 5A, a rubber chafer 5B, a bead bundle 5C and an apex 6 as well as an annular sidewall internal rubber insert 8 positioned between carcass plies in the sidewall region of the tire for FIG. 4, FIG. 5 and FIG. 6.

Annular configured outer sidewall rubber layers and annular configured sidewall rubber inserts positioned between carcass plies in the sidewall region of the tire are, in general, well known to those having skill in such art.

In one embodiment shown in FIG. 1, the outer sidewall rubber layer is an individual rubber layer 2 which extends from the outer visible surface 3 of the sidewall to a carcass ply 4.

In another embodiment shown in FIG. 2 and in FIG. 3, the outer sidewall rubber layer is composed of laminar rubber layers comprised of a thin outer, visible, rubber layer 2A and underlying internal rubber layer 2B wherein the outer sidewall laminar rubbers extend from the outer visible surface 3 of the sidewall to a carcass ply 4.

In a further embodiment shown in FIG. 4, the sidewall internal rubber insert 8 is shown as being positioned between carcass plies 4A, 4B. Such carcass plies are typically composed of continuous cord reinforced rubber as is well known to those having skill in such art. Carcass plies typically extend from one bead bundle in the bead region of the tire to an opposite bead bundle of the tire through its crown region, as is also well known to those having skill in such art.

The sidewall rubber layer 2 and laminar combination of layers 2A, 2B extend radially outward generally from the bead region 5, for example from (exclusive of) the chafer rubber 5B, to the general shoulder region 7 of the tire 1. The sidewall layer 2 and combination of laminar layers 2A, 2B thereby extend, in the direction of the shoulder region 7, beyond the outermost extension 6A of the apex 6.

The width of the outer sidewall rubber layer 2 and laminar combination of layers 2A, 2B extend from the outer, visible, sidewall surface 3 to the carcass ply 4.

In FIG. 1, the sidewall layer 2 contains an adhesive coated short carbon fiber dispersion.

In FIG. 2, the outer sidewall layer 2A of the laminar outer sidewall layer contains an adhesive coated short carbon fiber dispersion.

In FIG. 3, the internal sidewall layer 2B of the laminar outer sidewall layer contains an adhesive coated short carbon fiber dispersion.

In FIG. 4, the sidewall internal rubber insert 8 and, optionally, the outer sidewall rubber layer 2, contain an adhesive coated short carbon fiber dispersion.

In FIG. 5, the sidewall internal rubber insert 8 and, optionally, the outer sidewall rubber layer 2A of the laminar outer sidewall layer, contain an adhesive coated short carbon fiber dispersion.

In FIG. 6, the sidewall internal rubber insert 8 and, optionally, the internal outer sidewall rubber layer 2B of the laminar outer sidewall layer, contain an adhesive coated short carbon fiber dispersion.

In practice, said rubber reinforcing carbon black for said sidewall rubber compositions, namely the outer sidewall rubber layer 2, 2A, 2B and sidewall internal rubber insert 8 which contain said short carbon fiber dispersion is preferably a relatively medium reinforcing carbon blacks having an Iodine absorption value (ASTM D-1510) in a range of from 30 to 80 g/kg and a DBP adsorption value (ASTM D-2414) in a range of from 90 to 130 cc/100g. Representative examples of such carbon blacks, according to their ASTM designations which may be found in The Vanderbilt Rubber Handbook, 13th Edition (1990) on Pages 416 and 417, are, for example, N660, N550, N650 and N351.

In practice, the rubber compositions for the sidewall layers and insert of this invention may be prepared, for example, in a sequential series of at least one separate and individual preparatory internal rubber mixing steps, or stages, in which the diene-based elastomer is first mixed with the prescribed chopped carbon fibers and reinforcing filler as carbon black and/or silica followed by a final mixing step where curatives are blended at a lower temperature and for a substantially shorter period of time.

It is conventionally required after each mixing step that the rubber mixture is actually removed from the rubber mixer and cooled to a temperature of less than 40°C and, for example, in a range of 40°C to 20°C and then added back to an internal rubber mixer for the next sequential mixing step, or stage.

The forming of the tire sidewall outer layer(s) and sidewall internal rubber insert may be provided, for example, by conventional means such as, for example, by extrusion of rubber composition to provide a shaped, unvulcanized rubber sidewall composition.

It is understood that the tire, as a manufactured article, is prepared by shaping and sulfur curing the assembly of its components at an elevated temperature (e.g. 140°C to 180°C) and elevated pressure in a suitable mold.

It is readily understood by those having skill in the art that the rubber composition would be compounded by methods generally known in the rubber compounding art, such as mixing the various sulfur-vulcanizable constituent rubbers with various commonly used additive materials, as herein before discussed, such as, for example, curing aids such as sulfur, activators, retarders and accelerators, processing additives, such as rubber processing oils, resins including tackifying resins, and plasticizers, fillers, pigments, fatty acid, zinc oxide, microcrystalline waxes, antioxidants and antiozonants, peptizing agents and reinforcing materials such as, for example, carbon black and silica. As known to those skilled in the art, depending on the intended use of the sulfur vulcanizable and sulfur vulcanized material (rubbers), the additives mentioned above are selected and commonly used in conventional amounts.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. Accelerators are used to control the time and/or temperature required for vulcanization and to improve the properties of the vulcanizate.

The mixing of the rubber composition can, for example, be accomplished by the aforesaid sequential mixing process. For example, the ingredients may be mixed in at least one sequential non-productive (preparatory) mixing stage followed by a productive (final) mix stage. The final curatives are typically mixed in the final stage which is conventionally called the "productive" or "final" mix stage in which the mixing typically occurs at a temperature, or ultimate temperature, lower than the mix temperature(s) of the preceding non-productive mix stage(s).

The following examples are presented to further illustrate the invention. The parts and percentages are by weight unless otherwise indicated.

### Example I

Samples of rubber compositions were prepared to evaluate the effect of an inclusion of a dispersion of treated (adhesive coated) short carbon filaments (fibers) in a rubber composition in a sense of a sidewall rubber layer are depicted in the drawings and in a sense of a sidewall internal rubber insert are depicted in FIG. 4, FIG. 5 and FIG. 6.

The rubber samples are referred to in this Example as Control Sample A without the treated short carbon fibers and Sample B which contained a dispersion of adhesive coated short carbon fibers in a form of chopped cords comprising a plurality of adhesive coated carbon filaments.

The rubber compositions were prepared in an internal rubber mixer using two mixing stages, namely, a non-productive mix stage, in which ingredients are mixed and blended, except for sulfur curative and vulcanization accelerator(s), for 3 to 4 minutes to a temperature of 150°C to 170°C and the resulting mixture dumped from the mixer, sheeted out and allowed to cool to below 40°C.

The resulting rubber composition is then mixed in a productive mixing stage in an internal rubber mixer, in which sulfur curative and accelerators are added, for between 2 and 3 minutes to a temperature of between 100 and 120°C.

Table 1 illustrates formulations for the rubber Samples.

**Table 1**

| | Samples | |
|---|---|---|
| Material | Control | |
| | A | B |
| **Non-Productive Mixing Step** | | |
| Cis 1,4-polyisoprene natural rubber | 40 | 40 |
| Cis 1,4-polybutadiene rubber² | 60 | 60 |
| Rubber processing oil, microcrystalline wax, tackifier³ | 19 | 19 |
| AntioxidantS⁴ | 4 | 4 |
| Zinc oxide | 2 | 2 |
| Fatty acid⁵ | 1 | 1 |
| Carbon black⁶ | 51 | 51 |
| Chopped carbon fiber⁷ | 0 | 5 |

| **Productive Mixing Step** | | |
|---|---|---|
| Sulfur | 2 | 2 |
| Accelerators⁸ | 0.7 | 0.7 |

| | | |
|---|---|---|
| ²Obtained as Budene^{™} 1207 from The Goodyear Tire & Rubber Company ³Rubber processing oil, microcrystalline wax and phenolic based resin ⁴Antioxidants of the amine and quinoline type ⁵Comprising primarily stearic acid and a minor amount of palmitic and oleic acids ⁶Rubber reinforcing (classical) carbon black as N550, an ASTM designation ⁷Resorcinol-formaldehyde (RFL) adhesive coated short carbon fibers derived from coating a cord of carbon fibers as 12K-3MM 5000C TRT (trade name) from NGF Canada, Ltd with an hereinbefore described RFL adhesive (resorcinol, formaldehyde, latices and urea), curing and drying the adhesive, and the adhesive coated cord then chopped into short fibers having an average length of about 3 millimeters. ⁸Vulcanization accelerators of the sulfenamide and diphenyl guanidine types | | |

Various physical properties of the Samples of Table 1 are reported in Table 2.

**Table 2**

| | Samples | |
|---|---|---|
| Properties | Control | |
| | A | B |
| Chopped carbon fiber (phr) | 0 | 5 |

| **Rheometer, (MDR)¹, 160°C, 30 min** | | |
|---|---|---|
| Maximum torque (dNm) | 10.9 | 10.2 |
| Minimum torque (dNm) | 1.9 | 1.9 |
| Delta torque | 9.0 | 8.3 |
| T90 (minutes) | 12.6 | 13.3 |

| **Stress-strain, (ATS)², ring tensile, 23 min, 170°C** | | |
|---|---|---|
| Tensile strength (MPa) | 12 | 11 |
| Elongation at break (%) | 701 | 624 |
| 300% modulus (MPa) | 3.8 | 3.9 |

| **Shore A Hardness (cured at 160°C for 15 minutes)** | | |
|---|---|---|
| 23°C | 49 | 55 |
| 100°C | 58 | 56 |

| **Rebound** | | |
|---|---|---|
| 23°C | 52 | 52 |
| 100°C | 58 | 56 |
| | | |
| Tear Strength, 95°C, Newtons³ | 163 | 156 |

| | | |
|---|---|---|
| ¹Data obtained according to Moving Die Rheometer instrument, model MDR-2000 by Alpha Technologies, used for determining cure characteristics of elastomeric materials, such as for example Torque, T90 etc. ²Data obtained according to Automated Testing System instrument by the Instron Corporation which incorporates six tests in one system. Such instrument may determine ultimate tensile, ultimate elongation, moduli, etc. ³Data obtained according to a tear strength (peal adhesion) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force. | | |

From Table 2 it can be seen that the addition of 5 phr of the adhesive coated chopped carbon fiber (Sample B) gave similar cure behavior, stress-strain properties and rebound values as the Control Sample A which did not contain the adhesive coated chopped carbon fiber.

This is considered herein to be significant in the sense that it indicates that the rubber composition containing the adhesive coated chopped carbon fiber (Sample B) would be expected to have the same level of heat build-up for a tire sidewall outer rubber layer and for a sidewall internal rubber insert as the Control Sample A rubber composition during dynamic operation of the tire which is significantly beneficial toward maintaining a similar durability of a tire sidewall outer rubber layer.

From Table 2 it can also be seen that the 23°C Shore A hardness value for Sample B, (which contained the adhesive coated chopped carbon fiber), increased significantly as compared to Control Sample A, (which did not contain the adhesive coated chopped carbon fiber), but, however, at the higher temperature (100°C), the Shore A hardnesses of Sample B and Control Sample A were equivalent.

Accordingly, since a tire sidewall during dynamic operation typically exhibits a temperature between 23°C and 100°C, the stiffness of the rubber composition is considered herein to increase at such intermediate temperatures with the addition of the adhesive coated chopped carbon fiber when such rubber composition used for a tire sidewall outer rubber layer and for a sidewall internal rubber insert.

Further, from Table 2, the tear strength value for Sample B is an indication that adequate bonding has taken place between the adhesive coated chopped carbon fibers and the rubber composition for use in a tire sidewall outer rubber layer and for a sidewall internal rubber insert.

### Example II

Tires of size 205/55R16 are prepared having a tire rubber sidewall layer similar to FIG 1 and identified herein as Tire X and Tire Y.

Tire X contained a sidewall layer based upon Control Sample A of Example I which does not contain a dispersion of chopped adhesive coated carbon fibers.

Tire Y contained a sidewall layer based upon Sample B of Example I which contains 5 phr of a dispersion of chopped adhesive coated carbon fibers.

Based upon a subjective harshness test vehicular ride, the Tire Y with the outer sidewall rubber layer which contained the adhesive coated chopped carbon fiber dispersion was observed to provide a 6 percent improvement in automobile ride comfort as compared to Tire X. In particular, Tire Y was subjectively rated better than Tire X for impact damping vehicular travel over small and large disturbances as well as a smoother road ride in general.

## Claims

1. A tire with at least one component selected from an annular outer sidewall rubber layer (2) and an annular sidewall internal rubber insert (8); wherein said outer sidewall layer (2) extends radially outward from a bead region (5) of the tire (1) to a shoulder region (7) of the tire (1) and comprises:
(A) a rubber layer which contains a dispersion of adhesive coated short carbon fiber reinforcement which is exclusive of continuous cord reinforcement, or
(B) a laminar plurality of rubber layers (2A, 2B) comprising an outer, visible rubber layer (2B) and an underlying, internal rubber layer (2A) positioned axially inward from said outer rubber layer (2B), wherein:
(1) said outer, visible rubber layer (2B) of said laminar plurality of rubber layers contains a dispersion of adhesive coated short carbon fiber reinforcement and is exclusive of continuous cord reinforcement, or
(2) said underlying, internal rubber layer (2A) of said laminar plurality of layers contains a dispersion of adhesive coated short carbon fiber reinforcement and is exclusive of continuous cord reinforcement; and/or
wherein said sidewall internal rubber insert, if present, is positioned between two carcass plies (4A, 4B) in the sidewall region (2) of the tire (1) and contains a dispersion of adhesive coated short carbon fiber reinforcement exclusive of continuous cord reinforcement.

2. The tire of claim 1 wherein at least one of the rubber layers (2, 2A, 2B) and/or the annular sidewall internal isert (8) containing said short carbon fiber reinforcement comprises:
(A) at least one conjugated diene-based elastomer,
(B) from 0.1 to 15 phr of a dispersion therein of adhesive coated short carbon fibers, and
(C) from 20 to 100 phr of reinforcing filler comprising:
(1) rubber reinforcing carbon black, or
(2) from 10 to 100 phr of precipitated silica and up to 90 phr of rubber reinforcing carbon black; and
(D) optionally, a coupling agent having a moiety reactive with hydroxyl groups contained on the surface of said silica and another different moiety interactive with said diene-based elastomer.

3. The tire of claim 1 or 2 wherein said component is said outer sidewall rubber layer (2) containing said dispersion of adhesive coated short carbon fibers and wherein said outer sidewall layer extends from an outer visible surface of the sidewall (2) inward to a tire carcass ply (4).

4. The tire of at least one of the previous claims wherein said component is said annular outer sidewall rubber layer composed of a laminar plurality of rubber layers (2A, 2B) comprising an outer, visible rubber layer (2B) and an underlying, internal rubber layer (2A) positioned axially inward from said outer rubber layer (2B), wherein said outer, visible rubber layer (2B) of said laminar plurality of rubber layers contains a dispersion of adhesive coated short carbon fiber reinforcement and wherein said annular outer sidewall rubber layer extends from an outer visible surface of the sidewall (2) inward to a tire carcass ply.

5. The tire of at least one of the previous claims wherein said component of said outer sidewall layer is a laminar plurality of rubber layers comprised of an outer visible rubber layer and an underlying, internal rubber layer which contains a dispersion of adhesive coated short carbon fiber reinforcement and wherein said outer sidewall layer extends from an outer visible surface of the sidewall inward to a tire carcass ply.

6. The tire of claim 3, 4 or 5 wherein said tire (1) further contains said sidewall internal rubber insert (8).

7. The tire of at least one of the preceding claims wherein said short adhesive coated carbon fibers have an average length within a range of from 1 to 10 millimeters and an average diameter within a range of from 1 to 20 microns, and/or
wherein said short adhesive coated carbon fibers are carbon fibers which have a coating thereon which comprises RFL adhesive coating comprising a resorcinol-formaldehyde resin and polymeric binder, and/or
wherein said adhesive coated short carbon fibers for said sidewall outer layer are substantially aligned with each other in parallel manner in an annular direction with the rolling direction of the tire.

8. The tire of claim 7 wherein the RFL adhesive is a resorcinol-formaldehyde resinous product of resorcinol and formaldehyde together with a vinylpyridine/styrene/butadiene terpolymer and acrylonitrile/butadiene copolymer, which optionally contains urea.

9. The tire of claim 8 wherein the carbon fibers are impregnated with an epoxy prior to coating with said RFL adhesive composite.

10. The tire of at least one of the previous claims wherein said short adhesive coated carbon fibers are substantially aligned parallel to each other.
